# EUROPÄISCHE PATENTSCHRIFT

(11) **EP 0 720 633 B1**
(45) Veröffentlichungstag und Bekanntmachung des Hinweises auf die Patenterteilung: **01.12.2004**
(21) Anmeldenummer: 94928809.6
(22) Anmeldetag: 24.09.1994
(51) Int. Cl.: C08K 7/02

(54) **FASERENTHALTENDER KUNSTSTOFF, VERFAHREN ZU SEINER HERSTELLUNG, FASERENTHALTENDES GRANULAT, FASERENTHALTENDES POLYMERCOMPOUND**
FIBRE-CONTAINING PLASTICS, PROCESS FOR PRODUCING THE SAME, FIBRE-CONTAINING GRANULATE, FIBRE-CONTAINING POLYMER COMPOUND
MATIERE PLASTIQUE CONTENANT DES FIBRES, SON PROCEDE DE PRODUCTION, GRANULE CONTENANT DES FIBRES, COMPOSE POLYMERE CONTENANT DES FIBRES

(30) Priorität: 24.09.1993 DE 4332587
(43) Veröffentlichungstag der Anmeldung: 10.07.1996
(73) Patentinhaber: COLOR PLASTIC CHEMIE, ALBERT SCHLEBERGER GMBH, D-42875 Remscheid (DE)
(72) Erfinder: BERGMANN, Franz, D-50997 Köln (DE)
(74) Vertreter: Füssel, Michael, Dipl.-Ing.
(86) Internationale Anmeldenummer: PCT/EP1994/003194
(87) Internationale Veröffentlichungsnummer: WO 1995/008592

(56) Entgegenhaltungen:
- EP-A- 0 259 555
- EP-A- 0 596 379
- GB-A- 2 090 849

## Beschreibung

Die Erfindung betrifft einen faserenthaltenden Kunststoff, ein Verfahren zu seiner Herstellung, ein faserenthaltendes Granulat, ein faserenthaltendes Polymercompound.

Es ist mehrfach versucht worden, derartige Kunststoffe, insbesondere thermoplastische Kunststoffe mit Fasern zu modifizieren, um ein ansprechendes Äußeres zu erhalten. Die dabei erzielten Ergebnisse waren stets unbefriedigend, da einerseits mechanische Beeinträchtigungen des Kunststoffs nicht ausgeschlossen werden konnten.
Dies ist insbesondere darauf zurückzuführen, daß die Fasereinbettung in der Kunststoffmatrix insbesondere an den Faserenden unbefriedigend war. Die hierdurch entstehenden Kerbwirkungen führten zu Spannungskonzentrationen im Kunststoff im Bereich der Faserenden, so daß insgesamt die mechanische Festigkeit des Kunststoffs herabgesetzt wurde.

Andererseits ergab sich hierdurch eine Materialversprödung, so daß derartig modifizierte Kunststoffe nicht brauchbar waren.

Die obengenannten Nachteile ergaben sich insbesondere in Verbindung mit Glasfasern, Aramidfasern, Carbonfasern.

Letztere weisen zudem noch den Nachteil auf, daß sie ausgesprochen biegeempfindlich sind. Dies führte zum Teil dazu, daß die Carbonfasern während der Extrusionsverarbeitung zerbrachen und anschließend als kurze Stummel aus der Kunststoffoberfläche herausragten. Derartige Kunststoffe sind für technische Einsatzzwecke nicht zu gebrauchen. Eine Übersicht über diese unerwünschten Eigenschaften gibt Ullmann, encyclopaedia of industrial chemistry 1992, Vol. A 20, S. 732 ff.

Desweiteren hat man versucht, synthetische Fasern als Faserfüllstoff in thermoplastisches Material einzubringen. Dies führte jedoch zum vorzeitigen Aufschmelzen der synthetischen Fasern. Hierdurch wurde einerseits das Fasergefüge geschädigt. Andererseits litt das Faseraussehen dadurch, daß insbesondere der Crimp-Effekt nicht zu übersehen war. Darüber hinaus kann bei synthetischen Fasern keinesfalls ausgeschlossen werden, daß ein farbmäßiges Durchmischen des Polymer mit dem Kunststoff stattfindet, so daß die am Ende geforderten Farben stets sowohl von der Farbe des Kunststoffs, als auch von der Farbe der synthetischen Fasern beeinflußt waren.

Es ist daher Aufgabe der Erfindung, einen faserenthaltenden Kunststoff zu schaffen, der trotz der eingelagerten Fasern eine gute mechanische Festigkeit bietet und bei dem zwischen den Farbstoffen der Fasern und den Farbstoffen des Kunststoffs keine Wechselwirkung auftritt.

Diese Aufgabe löst die Erfindung durch einen Kunststoff nach Anspruch 1.

Aus der Erfindung ergibt sich der Vorteil, daß, bedingt durch eine ausgesprochen gute Dispergiereigenschaft der Fasern, eine gute gleichmäßige Faserverteilung in der Kunststoffmatrix erfolgt.

Dieser Vorteil kann dadurch noch verbessert werden, daß die Fasern als Faserfüllstoff in Form von vorextrudiertem Granulat zusammen mit dem Kunststoff ein weiteres Mal gemeinsam extrudiert werden können, ohne daß die Fasern dabei ihre positiven Eigenschaften verlieren, die sie in der Kombination mit der Kunststoffmatrix aufweisen. Durch die zweimalige Extrusion der Fasern, - der Vorextrusion zur Herstellung des Granulats, und der hinzukommenden gemeinsamen Extrusion mit dem Kunststoff-, läßt sich eine sehr gleichmäßige Verteilung der Fasern im gesamten Kunststoff erzielen. Dieser Vorteil konnte zum Beispiel bei der Verwendung von Carbonfasern nicht beobachtet werden. Bei Carbonfasern hingegen besteht immer die Gefahr, daß diese während der Extrusion so durchgewalkt und mechanisch beansprucht wurden, daß sie auseinandersplittern und ausfransen.

Dieser Vorteil wird durch die Kombination der natürlichen oder halbsynthetischen Fasern mit dem entsprechenden Kunststoff erreicht. Hierbei macht sich die Erfindung die Erkenntnis zunutze, daß diese Fasern relativ elastisch und weich sind, dabei aber ohne weiteres einen gewissen mechanischen Zusammenhalt bieten, so daß sie im wesentlichen und ausschließlich vollständig innerhalb der jeweiligen Kunststoffmatrix eingebettet werden konnten. Ein Herausschauen der Faserenden aus der Kunststoffoberfläche konnte in keinem Fall beobachtet werden.

Es ist demnach eine Erkenntnis der Erfindung, daß aus diesen Gründen erst durch die Kombination von Kunststoffen und Fasern der gesuchte Kunststoff entstehen konnte.

Dabei lassen sich Fasermengen mit Gewichtsteilen im oberen Grenzbereich immer noch gut mit einem Kneter in die Kunststoffmatrix einbringen.

Die Fasern können aus einem einheitlichen Material bestehen oder aus einem Gemisch mehrerer Faserarten. Es konnte beobachtet werden, daß auch Gemische aus reinen Zellulosefasern mit modifizierten Zellulosefasern die gewünschten Eigenschaften besaßen. Insbesondere die Kombination der reinen Zellulosefasern mit den modifizierten Zellulosefasern eröffnet weitere Möglichkeiten, sich die jeweils positiven Eigenschaften der jeweiligen Fasern gezielt für die Erfindung zunutze zu machen.

Hierzu sind insbesondere zu erwähnen:
thermische Stabilität, keine Beeinflussung der physikalischen Polymereigenschaften, hohe Licht- und/oder Wetterechtheit, Reißfestigkeit (z. B. bei Hochmodulfasern).

Dabei konnte beobachtet werden, daß bereits Gemische mit lediglich zwei Faser-Komponenten unter Beibehaltung der oben genannten Vorteile das optische Aussehen der hergestellten Kunststoffteile beachtlich verbesserten.

In diesem Zusammenhang ist insbesondere ein Fasergemisch zu erwähnen, welches aus einem Zellwolle/Viskosefasergemisch besteht. Der Vollständigkeit halber soll gesagt sein, daß die jeweiligen Komponentenanteile sowohl der Zellwolle als auch der Viskose ohne Einschränkung der Erfindung zwischen 100 und 0 % liegen können.

Auch hieraus ergibt sich ein weiterer Vorteil der Erfindung: Erfindungsgemäß lassen sich nämlich prinzipiell alle möglichen Zellulosefasern in beliebigen Konzentrationen miteinander mischen.

Dabei können die einzelnen Faserkomponenten als solche verwendet werden oder die Faserkomponenten können mittels geeigneter Farbstoffe vor oder nach der Stapelfaserbildung angefärbt werden.

Sehr gute Ergebnisse wurden mit spinndüsengefärbten Fasern erzielt. Dies wird darauf zurückgeführt, daß bei spinndüsengefärbten Fasern ein unmittelbarer Kontakt zwischen Farbpigment und Kunststoff nicht stattfindet. Man vermutet, daß deshalb ein Anfärben des Kunststoffs durch die Farbpigmente der Fasern unterbleibt.

Der Vorteil der großen Variationsbreite der Faserkonzentrationen liegt darin begründet, daß die Konzentration der Zellulosefasern in der Kunststoffmatrix auf einen bestimmten Prozentsatz beschränkt ist. Dabei ist 20 % der Grenzwert, bei dem eine ausreichende Fasereinbringung gerade noch beobachtet werden konnte. Im Fall von Zellwolle-/ Viskosefasern lag dabei der Faservolumenanteil in der Größenordnung des Kunststoffanteils.

Dabei sind die Eigenschaften des modifizierten Kunststoffs von den jeweiligen Faser-Komponentenanteilen bei Fasergemischen prinzipiell unabhängig, solange obiger Grenzwert eingehalten ist.

Dabei kommt der Erfindung insbesondere deshalb ein Augenmerk zu, weil die Kunststoffmatrix aus einem Kunststoff besteht, dessen Farbe im Kontrast zur Farbe der Fasern steht.

Bei derartigen Kunststoffen lassen sich insbesondere die innerhalb der Kunststoffmatrix eingebetteten Fasern leicht von außen ausmachen, wodurch ein gewisser Tiefeneffekt entsteht. Desweiteren konnte festgestellt werden, daß mit derartigen Faserlängen modifizierter Kunststoff im wesentlichen die Tendenz zur Schmutzunempfindlichkeit zeigt.

Dabei konnte insbesondere mit genarbten Oberflächen der Tiefeneffekt verbessert werden, da durch die Narbung die Lichtreflektion verringert wurde. Damit wurden auch die tiefer eingebetteten Fasern im Kunststoff deutlich sichtbar.

Trotzdem bot sich eine geschlossene Kunststoffoberfläche ohne herausragende Faserenden mit kunstlederartigem Griff.

Dabei sind einige Anwendungsfälle, insbesondere Anwendungsfälle im Automobilbereich bekannt, in denen der Kunststoff zur Erzielung dekorativer Verbesserungen bislang lackiert wurde. Im Zuge zunehmender Anforderungen an wiederholte Recyclebarkeit lassen sich derartige Kunststoffe in Zukunft kaum noch vermarkten. Hierin liegt ein wesentlicher Vorteil der Erfindung.

Der erfindungsgemäße Kunststoff ist infolge der unbeeinflußbaren Fasereigenschaften nahezu beliebig oft recyclebar. Insbesondere wurde beobachtet, daß auch nach mehreren Verarbeitungsgängen keine Farbbeeinflussung der Kunststoffmatrix durch die Fasern erfolgte. Damit wurde ein Kunststoff geschaffen, dessen textiler Charakter, bzw. dessen dekorative Eigenschaften auch nach mehrfachen Recyclevorgängen erhalten bleiben.

Die Faserdurchmesser gemäß Anspruch 3 haben sich als vorteilhaft erwiesen, wobei insbesondere bei Gemischen aus mehreren Faserarten die Faserdurchmesser der einzelnen Faserarten nicht identisch übereinstimmen müssen.

Der erfindungsgemäß modifizierte Kunststoff hat sich insbesondere bewährt für die Anwendung im Fahrzeugbau, sowohl im Innenbereich als auch im Außenbereich.

Als Kunststoffmaterialien kommen die Polymere nach Anspruch 10 und insbesondere z. B. Polyolefine, ABS in Kombination mit Polycarbonat oder Polyamid bzw. PVC in Kombination mit ABS in Betracht, nämlich als Blend- bzw. Mischpolymerisat.

Von großer Bedeutung ist auch Polypropylen, worauf besonders hingewiesen werden soll.

Oben genannte Polymere können dabei gemäß Anspruch 12 jeweils in Kombination mit organischen oder/und anorganischen Pigmenten oder/und Farbstoffen Verwendung finden.

Insbesondere können die Farbzuschläge alle Aufmachungen einschließlich Granulat, Paste, Gries oder Pulver haben.

Insbesondere der Aufmachung als sogenanntes "masterbatch" und/oder die Aufmachung als sogenanntes "Polymer-compound" soll im Rahmen der Erfindung besonders erwähnt werden. Dabei wird davon ausgegangen, daß ein masterbatch eine hochangereicherte Mischung von Zuschlagstoffen ist, die in einer 1-2%igen Zugabe zugeführt werden. Der besondere Vorteil dieser Aufmachung liegt deshalb darin, daß durch die geringen Zugabemengen eine leichte Dosierung mit homogener Verarbeitung stattfinden kann.

Weiterhin kommen als bevorzugte Aufmachungen Polymer-compounds in Betracht. Im Rahmen der vorliegenden Anmeldung ist bei Polymer-compounds von verarbeitungsfertigen Mischungen von Polymeren oder Kunststoffen mit anderen Additiven auszugehen, soweit diese für die Herstellung der Endprodukte erforderlich sind.

Derartige Kombinationen, können, je nach Anwendungsfall, mit allen üblichen Additiven in Verbindung sein. Insbesondere kommen hier Lichtschutzmittel, wie z. b. UV-Absorber in Betracht, ebenso wie Antistatica oder Thermostabilisatoren.

Ein wesentlicher Aspekt soll für den Fahrzeugbau darauf gerichtet sein, daß flammschutzhemmende Mittel eingebracht werden können.

Für bestimmte technische Zwecke können auch Gleitmittel Verwendung finden.

Als Füllmittel lassen sich beispielsweise Talkum und Kreide verarbeiten, ohne daß der modifizierte Kunststoff die oben genannten Eigenschaften verliert.

Darüber hinaus soll ausdrücklich gesagt sein, daß nicht nur Thermoplaste in Anwendung der Erfindung modifiziert werden können, sondern ebensogut hitzehärtbare Kunststoffe, Schaumstoffe und elastomere Kunststoffe.

An Verarbeitungsverfahren ist weiterhin das Spritzgießverfahren zu nennen, gleichsam der Rotationsguß, sowie die Extrusion zu Flachfolien, Platten, Rohr oder anderen Profilen.

Es hat sich gezeigt, daß die mehrfache Extrusion den erfindungsgemäßen Faserfüllstoff nicht beeinträchtigt.

Weiterhin kann der erfindungsgemäße Faserfüllstoff sowohl im Flaschenblasverfahren oder Spritzblasverfahren ebenso Anwendung finden als auch beim Gießen von z. B. ungesättigte Polyesterharzen bzw. PU-Harzen, Phenolharzen, Aminoplasten, monomeres PMMA.

Dabei ist die Herstellung des modifizierten Kunststoffs nach der Erfindung auf allen herkömmlichen kunststoffverarbeitenden Vorrichtungen mit einfachen Mitteln zu bewerkstelligen, in dem der entsprechende Kunststoff, z.B. ein Polymer, mit dem faserenthaltenden Kunststoffgranulat zusammengeführt und zum entsprechenden Werkstück, Formteil, Halbzeug z. B. extrudiert wird.

Dabei wird das Granulat mit einem Anteil von z. B. zwischen ca. 0,5 bis 20% dem Polymer zugegeben. Das Granulat enthält erfindungsgemäß die Additive und die natürlichen oder halbsynthetischen Fasern, z.B. zellulosische Spinnfasern.

Der jeweilige Granulatanteil hängt dabei ab vom gewünschten Füllgrad und dem gewünschten Faseranteil, der durch den vorgegebenen optischen Effekt vorbestimmt sein kann. Desweiteren wird der Granulatanteil bestimmt von der jeweiligen Farbintensität des Halbzeugs, Formteils, Werkstücks.

Das Granulat hat bevorzugt Längen zwischen 1mm und 4mm sowie Durchmesser zwischen 1mm und 3mm.

Der wesentliche Vorteil der Erfindung liegt darin, daß der Grundfarbton der Kunststoffmatrix durch die Zellulosefasern und/oder modifizierten Zellulosefasern nicht beeinträchtigt wird, sowie darin, daß infolge der Thermostabilität der Zellulosefasern und/oder modifizierten Zellulosefasern Kunststoffe mit Verarbeitungstemperaturen bis mindestens 280 Grad Celsius verarbeitet werden können.

Prinzipiell soll im Rahmen der vorliegenden Erfindung keine Obergrenze für die Verarbeitungstemperatur angegeben werden. Dies liegt darin, daß die Verarbeitungstemperaturen lokal sehr hoch werden können, insbesondere in Extrudern, während die Schmelztemperaturen des Kunststoffs erheblich niedriger liegen. Die in Frage kommende Grenztemperatur wird sich deshalb jeweils nach den Wärmeübergangsgesetzen in den Bereichen der höchsten Verarbeitungstemperaturen richten. Grundsätzlich kann jedoch gesagt werden, daß ein gewisser Abstand der Verarbeitungstemperaturen zur Carbonisierungstemperatur der Fasern gegeben sein sollte.

### Ausführungsbeispiele:

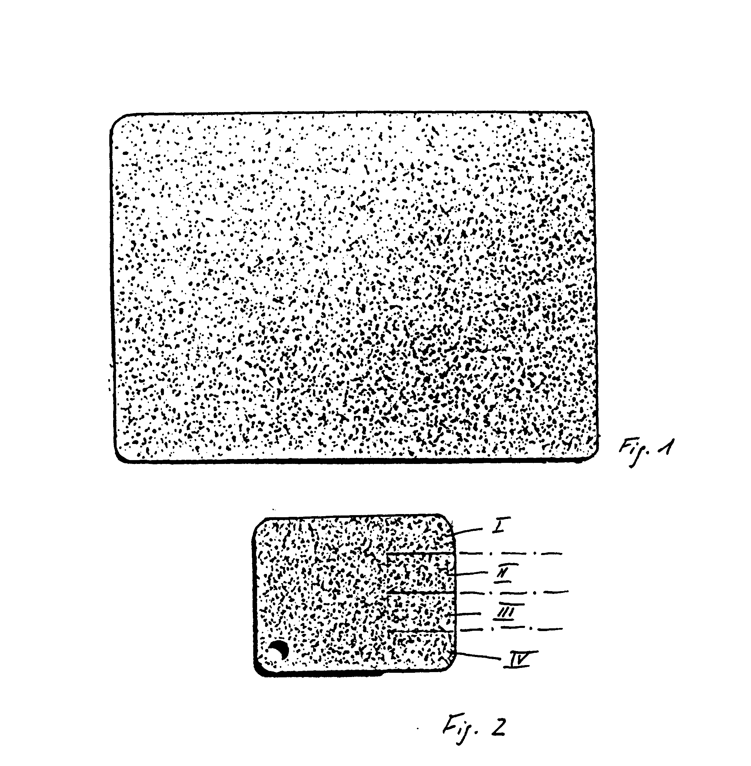

Für die in den Figuren 1 - 2 gezeigten Ausführungsbeispiele wurde zunächst ein masterbatch hergestellt, wie folgt:
Das masterbatch enthielt 20 Gewichtsteile Pigment und 15 Gewichtsteile Faserfüllstoff Zellwolle/Viskose, spinnschwarz 17 dtex, Stapelfaserlänge 0,8 - 1 Millimeter. Unter weiterer Zugabe von 65 % Gewichtsteilen Polypropylen wurden diese Bestandteile im Doppelschneckenextruder homogenisiert und dispergiert. Anschließend erfolgte die Bearbeitung zu Granulat mit einer Korngröße von 2mm Durchmesser und 3mm Länge.

Von diesem masterbatch wurden nun 4% Gewichtsteile auf 100% Polypropylen natur im Spritzgußverfahren zusammen mit dem Polypropylen natur in einen üblichen Extruder eingefüttert und zu einer Platte von 4mm gespritzt.

Wie hierzu Figur 1 zeigt, ist der Faserfüllstoff über die gesamte Fläche der plattenförmigen Probe gleichmäßig verteilt. Zu sehen sind nicht nur die an der Plattenoberfläche befindlichen Zellwolle/ Viskosefasern, sondern es läßt sich nicht verkennen, daß ein gewisser Tiefeneffekt vorhanden ist.

Hierzu zeigt die Figur 2 weitere Plattenproben. Im rechten Bereich sind an diesen Plattenproben vier Stufen I-IV ausgespart, so daß sich die gleichmäßige Dispergierung in Richtung der Plattendicke gut erkennen läßt. Die vier Stufen I - IV haben zur sichtbaren Plattenoberseite eine Abstand von 1 Millimeter, 1,5 Millimeter, 2 Millimeter, 2,5 Millimeter. Die Gesamtplattendicke beträgt 5 Millimeter. Demzufolge entspricht die Schnittebene der Stufe I einem Schnitt durch die Kunststoffplatte mit einem Millimeter Abstand zur Plattenoberfläche, die Schnittebene der Stufe II einem Schnitt durch die Kunststoffplatte mit einem Abstand zur Plattenoberflächen mit 1,5 Millimetern usw..

Prinzipiell läßt sich für die Verteilung der Zellwolle/Viskosefasern im Fertigprodukt kein Unterschied abhängig von dem jeweiligen Abstand von der Oberseite der Kunststoffplatte feststellen. Dies wurde in mehrfachen Versuchen bestätigt.

Daher betrifft die Erfindung in bevorzugter Ausführungsform einen faserenthaltenden Kunststoff, der 0,01 bis 20 Gew.-teile, bezogen auf 100 Gew.-teile des Kunststoffs, wenigstens einer natürlichen oder halbsynthetischen Faser, ausgenommen eine mikrobiell hergestellte Cellulosefaser, aufweist, wobei die natürliche Faser eine pflanzliche Faser ausgewählt aus Baumwolle, Jute oder Leinen oder eine tierische Faser aus Wolle ist und die halbsynthetische Faser eine cellulosische Spinnfaser ist, und wobei der Kunststoff dadurch einen Tiefeneffekt aufweist, daß die Farbe der Kunststoffmatrix im Kontrast zur Farbe der Fasern steht.

## Patentansprüche

1. Faserenthaltender thermoplastischer Kunststoff, der 0,01 bis 20 Gew.-teile, bezogen auf 100 Gew.-teile des Kunststoffs, wenigstens einer cellulosischen Faser aufweist, **dadurch gekennzeichnet, daß** die cellulosische Faser eine ersponnene und im Kontrast zur Farbe der Kunststoffmatrix spinndüsengefärbte Viskosefaser ist, und daß der Kunststoff durch den Farbkontrast zwischen Kunststoffmatrix und den von außen sichtbaren und innerhalb der Kunststoffmatrix eingebettete Fasern einen Tiefeneffekt aufweist.

2. Faserenthaltender Kunststoff nach den Anspruch 1, **dadurch gekennzeichnet, daß** zur Verbesserung des Tiefeneffekts eine genarbte Oberfläche erstellt wird, welche die Lichtreflexionen zur Sichtbarmachung der tiefen eingebetteten Fasern verringern.

3. Faserenthaltender Kunststoff nach Anspruch 1 oder 2,
**dadurch gekenzeichnet, daß**
die ersponnenen Viskosefasern Stapelfasern mit einer Faserlänge vn 50 Mikrometern bis 5 mm und/oder einem Faserdurchmesser von 1 Mikrometer bis 500 Mikrometern sind.

4. Kunststoff nach Anspruch 1 - 3,
**dadurch gekennzeichnet, daß**
die Viskosespinnfaser vom Wolltyp oder vom Baumwolltyp ist.

5. Kunststoff nach Anspruch 1,
**dadurch gekennzeichnet, daß**
der Kunststoff ausgewählt ist aus Niederdruck-PE, Hochdruck-PE, Polypropylen, PMMA, PVC, Polyvinylidenchlorid, PTFE, Polyamiden, aromatischen Polyestern, Polycarbonaten, Polysulfonen, Polystyrol, Polyacetal, thermoplastischen Copolymeren von Styrol und Acrylnitril, Polyimiden, thermoplastischen Copolymeren aus Styrol und Butadien, ABS, PU-Harzen, Synthesekautschuk, Ethylen-Propylen-Elastomeren, PPEPDM, elastomere Copolymere aus Styrol und Budatien, elastomere Copolymere aus Styrol und Chloropren und PU-Schäumen.

6. Kunststoff nach Anspruch 5,
**dadurch gekennzeichnet, daß** der Kunststoff ein Blend- oder Mischpolymerisat ist.

7. Kunststoff nach vorstehenden Ansprüchen,
**dadurch gekennzeichnet, daß**
er weiterhin übliche Hilfs- und Zusatzstoffe, beispielsweise Farbstoffe und Pigmente, Füllstoffe, Additive enthält.

8. Masterbatch, insbesondere in Granulatform, enthaltend 0,01 bis 80,00 Gew.-Teile wenigstens einer Viskosefaser nach den Ansprüchen 1 - 4, bezogen auf 100 Gew.-Teile des kunststoff haltigen masterbatchs, wobei die Kunststoffe aus den Ansprüchen 5 - 6 ausgewählt sind.

9. Polymercompounds, insbesondere in Granulatform, enthaltend 0,01 bis 80,00 Gew.-Teile wenigstens einer Viskosefaser nach Ansprüchen 1 - 4, bezogen auf 100 Gew.-Teile des kunststoffhaltigen Polymercompounds, wobei die Kunststoffe aus den Ansprüchen 5 - 6 ausgewählt sind.

10. Verfahren zur Herstellung des faserhaltigen Kunststoffs nach den Ansprüchen 1 - 9,
**dadurch gekennzeichnet, daß**
der Kunststoff zusammen mit der Faser/ dem Fasergemisch durch thermische Bearbeitung unter gleichzeitiger Durchmischung homogenisiert und dispergiert wird.

11. Verfahren nach Anspruch 10,
**dadurch gekennzeichnet, daß**
als Ausgangsgranulat für die thermische Bearbeitung ein faserenthaltendes masterbatch oder Polymer-compound mit 0,01 bis 80,00 Gew.-Teilen Faser, bezogen auf 100 Gew.-Teile des Gesamtgranulats, eingesetzt wird.

## Claims

1. Fibre-containing thermoplastic plastics material, which includes 0.01 to 20 parts by weight of at least one cellulosic fibre with respect to 100 parts by weight of the plastics material, **characterised in that** the cellulosic fibre is a viscose fibre which is spun and is coloured at the spinning nozzle in a contrast to the colour of the plastics material matrix, and that the plastics material has an impression of depth because of the colour contrast between the plastics material matrix and the fibres which are visible from the outside and are embedded within the plastics material matrix.

2. Fibre-containing plastics material as claimed in claim 1, **characterised in that** in order to improve the impression of depth a grained surface is produced which reduces the light reflections in order to make the deep, embedded fibres visible.

3. Fibre-containing plastics material as claimed in claim 1 or 2, **characterised in that** the spun viscose fibres are staple fibres having a fibre length of 50 micrometres to 5 mm and/or a fibre diameter from 1 micrometre to 500 micrometres.

4. Plastics material as claimed in claim 1 - 3, **characterised in that** the viscose spun fibre is of the wool type or cotton wool type.

5. Plastics material as claimed in claim 1, **characterised in that** the plastics material is selected from low-pressure PE, high-pressure PE, polypropylene, PMMA, PVC, polyvinylidene chloride, PTFE, polyamides, aromatic polyesters, polycarbonates, polysulfones, polystyrene, polyacetal, thermoplastic copolymers of styrene and acrylonitrile, polyimides, thermoplastic copolymers of styrene and butadiene, ABS, PU resins, synthetic rubber, ethylene-propylene elastomers, PPEPDM, elastomeric copolymers of styrene and butadiene, elastomeric copolymers of styrene and chloroprene and PU foams.

6. Plastics material as claimed in claim 5, **characterised in that** the plastics material is a blend polymeride or mixed polymeride.

7. Plastics material as claimed in the preceding claims, **characterised in that** it further contains conventional auxiliary and additional substances, for example dyestuffs and pigments, fillers, additives.

8. Masterbatch, in particular in granulated form, containing 0.01 to 80.00 parts by weight of at least one viscose fibre as claimed in claims 1 - 4 with respect to 100 parts by weight of the plastics material-containing masterbatch, wherein the plastics materials are selected from claims 5 - 6.

9. Polymer compounds, in particular in granulated form, containing 0.01 to 80.00 parts by weight of at least one viscose fibre as claimed in claims 1 - 4 with respect to 100 parts by weight of the plastics material-containing polymer compound, wherein the plastics materials are selected from claims 5 - 6.

10. Process for producing the fibre-containing plastics material as claimed in claims 1 - 9, **characterised in that** the plastics material is homogenised together with the fibre/fibre mixture through thermal processing with simultaneous thorough mixing and is dispersed.

11. Process as claimed in claim 10, **characterised in that** a fibre-containing masterbatch or polymer compound with 0.01 to 80.00 parts by weight of fibres with respect to 100 parts by weight of the total granulated material is used as the starting granulated material for the thermal processing.

## Revendications

1. Matière synthétique thermoplastique contenant des fibres qui contient 0,01 à 20 parties en poids, pour 100 parties en poids de la matière synthétique, d'au moins une fibre cellulosique, **caractérisée en ce que** la fibre cellulosique est une fibre de viscose filée et teintée dans la filière, avec un contraste par rapport à la teinte de la matrice de la matière synthétique et **en ce que** la matière synthétique présente un effet de profondeur par le contraste de teinte entre la matrice de la matière synthétique et les fibres visibles de l'extérieur et noyées dans la matrice de la matière synthétique.

2. Matière synthétique contenant des fibres selon la revendication 1, **caractérisée en ce qu'**en vue de l'amélioration de l'effet de profondeur, on réalise une surface grainée, qui diminue les réflexions de lumière pour rendre visible les fibres profondes noyées.

3. Matière synthétique contenant des fibres selon la revendication 1 ou 2, **caractérisée en ce que** les fibres de viscose filées sont des fibres discontinues avec une longueur de fibre de 50 µm à 5 mm et/ou un diamètre de fibre de 1 µm à 500 µm.

4. Matière synthétique selon la revendication 1, 2 ou 3, **caractérisée en ce que** les fibres filées de viscose sont du type laine ou du type coton.

5. Matière synthétique selon la revendication 1, **caractérisé en ce qu'**elle est choisie parmi le PE basse pression, le PE haute pression, le polypropylène, le PMMA, le PVC, le poly(chlorure de vinylidène), le PTFE, les polyamides, les polyesters aromatiques, les polycarbonates, les polysulfones, le polystyrène, le polyacétal, les copolymères thermoplastiques de styrène et d'acrylonitrile, les polyimides, les copolymères thermoplastiques de styrène et de butadiène, l'ABS, les résines de PU, le caoutchouc de synthèse, les élastomères d'éthylène et de propylène, le PPEPDM, les copolymères élastomères de styrène et de butadiène, les copolymères élastomères de styrène et de chloroprène et les mousses de PU.

6. Matière synthétique selon la revendication 5, **caractérisée en ce qu'**elle est un mélange de polymères ou un copolymère.

7. Matière synthétique selon les revendications précédentes, **caractérisée en ce qu'**elle contient en outre des adjuvants et additifs usuels, par exemple des colorants et des pigments, des charges, des additifs.

8. Mélange-maître, en particulier sous forme de granulat, contenant 0,01 à 80,00 parties en poids d'au moins une fibre de viscose selon les revendications 1 à 4, pour 100 parties en poids du mélange-maître contenant une ou des matières synthétiques, la ou les matière(s) synthétique(s) étant conforme(s) aux revendications 5 et 6.

9. Polymères composites, en particulier sous forme de granulat, contenant 0,01 à 80,00 parties en poids d'au moins une fibre de viscose selon les revendications 1 à 4, pour 100 parties en poids du polymère composite contenant une ou des matière(s) synthétique(s), la ou les matière(s) synthétique(s) étant conforme(s) aux revendications 5 et 6.

10. Procédé pour la préparation de la matière synthétique contenant des fibres selon les revendications 1 à 9, **caractérisé en ce qu'**on homogénéise et disperse la matière synthétique avec les fibres/le mélange de fibres par traitement thermique avec mélange simultané.

11. Procédé selon la revendication 10, **caractérisé en ce qu'**on utilise comme granulat de départ pour le traitement thermique un mélange-maître ou un polymère composite, contenant des fibres, avec 0,01 à 80,00 parties en poids de fibres pour 100 parties en poids du granulat total.
